# EUROPÄISCHE PATENTANMELDUNG

(11) **EP 2 520 612 A1**
(43) Veröffentlichungstag der Anmeldung: **07.11.2012**
(21) Anmeldenummer: 11165137.8
(22) Anmeldetag: 06.05.2011
(51) Int. Cl.: C08K 5/29, C08L 67/04

(54) **Neuartige langlebige, hydrolysestabile biobasierte Kunststoffe auf Basis von Polyhydroxyalkanoat (PHA), ein Verfahren zu deren Herstellung und deren Verwendung**

(71) Anmelder: Rhein Chemie Rheinau GmbH, 68219 Mannheim (DE)
(72) Erfinder: Fruth, Andrea, Dr., 65197 Wiesbaden (DE); Krug, Andreas, 68309 Mannheim (DE); Wiloth, Bernd, 68775 Ketsch (DE)
(74) Vertreter: Siegers, Britta

(57) **Zusammenfassung**

Die Erfindung betrifft Gegenstand der Erfindung sind neuartige langlebige, hydrolysestabile biobasierte Kunststoffe auf Basis von Polyhydroxyalkanoat (PHA), welche eine ausreichende Stabilität der Schmelze aufweisen, ein Verfahren zu deren Herstellung und deren Verwendung.

## Beschreibung

Die Erfindung betrifft neuartige langlebige, hydrolysestabile biobasierte Kunststoffe auf Basis von Polyhydroxyalkanoat (PHA), welche eine ausreichende Stabilität der Schmelze aufweisen, ein Verfahren zu deren Herstellung und deren Verwendung.

Biobasierte Kunststoffe, sogenannte Biopolymere, sind im Vergleich zu petrochemisch basierten Kunststoffen aufgrund der eingesetzten biobasierten Rohstoffe ökologisch nachhaltigere Werkstoffe. Insbesondere im Hinblick auf den Umweltschutz und die drohende Klimaerwärmung haben biobasierte Kunststoffe eine zunehmende Bedeutung nicht nur im Bereich Verpackung, sondern auch bei der Herstellung langlebiger sowie technischer Kunststoffprodukte erlangt. Um jedoch biobasierte Werkstoffe auf der Basis von Polyhydroxyalkanoaten im Vergleich zu herkömmlichen und etablierten Werkstoffen konkurrenzfähig zu machen, sind vielfach noch Optimierungen in der Werkstoffherstellung und -verarbeitung notwendig.

Biobasierte Kunststoffe bestehen beispielsweise aus einem aliphatischem Polyesterharz, welches durch direkte fermentative Herstellung aus Stärke, Zucker, Kohlenhydraten, Pflanzenöl oder Fetten hergestellt wird.

Biobasierte Kunststoffe haben den großen Vorteil, dass sie sehr umweltfreundlich sind. Im Bereich der technischen Anwendungen haben aus der Gruppe der Biopolymere besonders Polyhydroxyalkanoate (PHA) den Vorteil, dass sie beispielsweise eine höhere Wärmeformbeständigkeit, im Vergleich zu Polymilchsäure (PLA), besitzen. Dies erlaubt die Herstellung von langlebigen Gegenständen, welche aus Polymilchsäure aufgrund des niedrigen Erweichungspunktes nicht anwendbar sind, wie z.B. Wasserkocher, Fön. Weiterhin zeigen Polyhydroxyalkanoate eine sehr geringe Schrumpfung bei gefertigten Produkten, so dass auch Produktgeometrien möglich sind, die mit herkömmlichen Polymeren nicht realisiert werden können.

Sowohl Polymilchsäure als auch Polyhydroxyalkanoate zählen zur Klasse der aliphatischen Polyester und sind beide anfällig gegenüber einem Polymerabbau während der Verarbeitung und im Verlauf der Anwendung. Der Abbaumechanismus bei Polymilchsäure verläuft über den klassischen Weg einer Esterhydrolyse, bei dem es unter Einwirkung von Säuren oder Basen in Gegenwart von Wasser zu einer Spaltung der Esterbindung in der Polymilchsäure kommt, wodurch neue Hydroxyl-und Carboxylgruppen generiert werden.

-COO- + H₂O → -COOH + HO-

Die neuen Carboxylgruppen führen zu einer Hydrolyse weiterer Estergruppen im Polymilchsäure Polymer, d.h. der Prozess verläuft autokatalytisch. Die Esterspaltung in der Polymilchsäure führt folglich zu einem Polymerabbau und somit zu einer Verringerung der Lebensdauer der Polymilchsäure sowie einer instabilen Prozessführung.

Die Produktklasse der Polyhydroxyalkanoate ist jedoch im Vergleich zur Polymilchsäure weitaus weniger hydrolyseempfindlich. Dieser Unterschied hinsichtlich der Hydrolyseanfälligkeit ergibt sich aus dem unterschiedlichen Abbaumechanismus. Im Gegensatz zu Polymilchsäure dominiert bei Polyhydroxyalkanoaten ein anderer Abbaumechanismus, der einer β-Eliminierung. Diese β-Eliminierung führt zur Spaltung der Polyhydroxyalkanoat-Polymerkette unter Bildung von ungesättigten Polymerfragmenten, siehe Yoshihiro Aoyagi, et al., Polymer Degradation and Stability 76, 2002, 53 - 59.

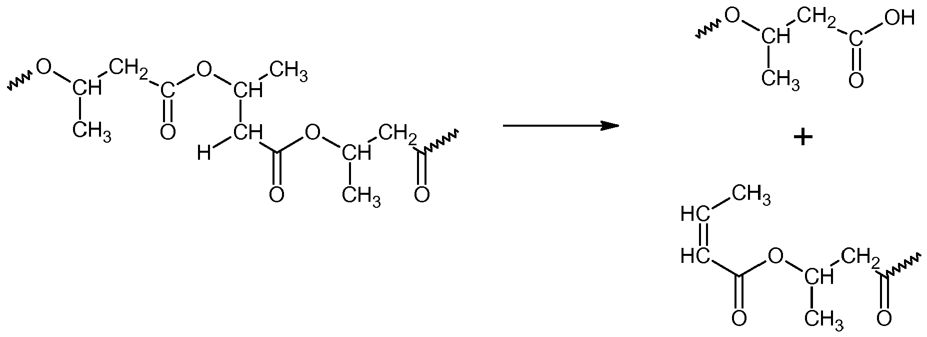

Im Vergleich zu Polymilchsäure spielt der hydrolytische Abbau von Polyhydroxyalkanoaten eine untergeordnete Rolle, kann jedoch, da es sich bei PHAs ebenso um aliphatische Polyester handelt, ebenfalls auftreten. Trotz des abweichenden Abbaumechanismus haben Polyhydroxyalkanoate den Nachteil, dass sie für langlebige und technische Anwendungen keine ausreichende Hydrolysestabilität besitzen und zudem schlecht verarbeitbar sind, was sich in einem starken Anstieg der Schmelzvolumenrate (MVR) zeigt. Es muss daher nach einer Möglichkeit gesucht werden, trotz der Kombination aus der weitgehend vorherrschenden β-Eliminierung und der dennoch ebenfalls auftretenden Hydrolyse, eine Stabilisierung von PHA während der Verarbeitung als auch während der Anwendung zu erreichen.

Es wurde versucht, über den Zusatz verschiedenster Additive dieses Problem zu lösen. So wird beispielsweise im Abstract von JP-A 2008 303 286 der Einsatz von 0,5 Gew.% eines polymeren Carbodiimides in Polyhydroxyalkanoaten beschrieben. Allerdings wird in Bezug auf die Hydrolysestabilität hier kein befriedigendes Ergebnis erreicht. Gleiches gilt für WO 2009119512, in welchem der Einsatz eines Polycarbodiimiden von Gemischen aus Polybutylensuccinat sowie Blends aus Polybutylensuccinat mit Polymilchsäure und Polyhydroxyalkanoaten genannt wird. Das eingesetzte aliphatische Polycarbodiimid wird dabei für die Stabilisierung des Polybutylensuccinates verwendet. Allerdings wird auch hier keine ausreichende Hydrolysebeständigkeit erhalten.

In EP-A 1 627 894 wird die Verwendung von Diisopropylphenylcarbodiimid als Hydrolyseschutzmittel in aliphatischen Polyesterharzen beschrieben. Jedoch wird hinsichtlich der Verarbeitbarkeit und dem Hydrolyseschutz kein zufriedenstellendes Ergebnis erreicht.

In der EP-A 10172530 wird der Einsatz einer Kombination aus einem monomeren und oligomeren Carbodiimid beschrieben. Dies führt zwar zu einer Verbesserung des Hydrolyseschutzes und der Verarbeitung, allerdings ist dieses Ergebnis hinsichtlich der Hydrolyseschutzwirkung in vielen Konzentrationsbereichen, noch nicht ausreichend.

Überraschender Weise wurde nun gefunden, dass die erfindungsgemäßen biobasierten Kunststoffe aus der Klasse der Polyhydroxyalkanoate, enthaltend mindestens > 0,5 Gew. % oligomeren und/oder polymeren aromatischen und/oder araliphatischen oligomeren Carbodiimidverbindung, diese Aufgabe erfüllen.

Gegenstand der vorliegenden Erfindung sind daher biobasierte Kunststoffe, enthaltend eine Kombination aus mindestens einem Polyhydroxyalkanoat und mindestens 0,5 Gew. %, bevorzugt 0,7 und 4 Gew. %, besonders bevorzugt 1 - 2,5 Gew.%, ganz besonders bevorzugt 1 bis 2,0 Gew. % mindestens eines oligomeren und/oder polymeren aromatischen und/oder araliphatischen Carbodiimids.

Bei den biobasierten Kunststoffen im Sinne der Erfindung handelt es sich vorzugsweise um Polyhydroxyalkanoate, welche durch direkte fermentative Herstellung aus Stärke, Zucker, Kohlenhydraten, Pflanzenöl oder Fetten hergestellt werden können.

Bei Polyhydroxyalkanoaten handelt es sich vorzugsweise um Verbindungen der Strukturformel (I) 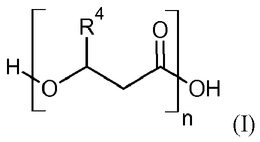 mit R⁴ = C₁- bis C₁₄-Alkyl. Besonders bevorzugt sind Polyhydroxybutyrat (PHB), Polyhydroxyvalerat (PHV), Polyhydroxybutyratvalerat (PHBV), Polyhydroxyhexonat (PHH), Polyhydroxyoctanoat (PHO), Polyhydroxybutyrathexanoat (PHBH) und Mischungen daraus.

Die als biobasierte Kunststoffe besonders bevorzugten Polyhydroxyalkanoate sind kommerziell verfügbar, z.B. unter dem Namen Mirel bei der Firma Telles bzw. als Enmat der Firma Tianan, oder können nach den, dem Fachmann geläufigen Verfahren, z.B. durch Fermentation, hergestellt werden.

Als oligomere und/oder polymere Carbodiimide sind alle bekannten Carbodiimide der Formel (II) einsetzbar

R'-(-N=C=N-R"'-)ₘ-R" (II),

in der
R"' einen aromatischen und/oder araliphatischen Rest bedeutet und bei m ≥1, R"' innerhalb des Moleküls gleich oder verschieden ist und bei verschiedenen Kombinationen jeder der vorgenannten Reste beliebig miteinander kombiniert werden kann,
R'" in dem Fall eines aromatischen oder eines araliphatischen Restes keinen oder in mindestens einer ortho-Stellung zum aromatischen Kohlenstoffatom, das die Carbodiimidgruppe trägt, aliphatische und/oder cycloaliphatische Substituenten mit mindestens 2 Kohlenstoffatomen tragen kann, bevorzugt verzweigte oder cyclische aliphatische Reste mit mindestens 3 Kohlenstoffatomen, insbesondere Isopropylgruppen tragen kann, die auch Heteroatome, wie z.B. N, S und/oder O, oder aber Imidazolyl, tragen können,
R' = C₁- C₁₈-Alkyl, C₅-C₁₈-Cycloalkyl-, Aryl, C₇-C₁₈- Aralkyl, -R-NHCOS- R¹, -R-COO R¹, -R-O R¹, -R-N(R¹)₂, -R-SR¹, -R-OH, -R-NH₂, -R-NHR¹, -R-Epoxy, -R-NCO, -R-NHCONHR¹, -R-NHCONR¹R² oder -R-NHCOOR³ wobei R = aromatischer, aliphatischer, cycloaliphatischer und/oder araliphatischer Rest, R"= H, -N=C=N-Aryl, -N=C=N-Alkyl, -N=C=N-Cycloalkyl, -N=C=N-Aralkyl, -NCO, -NHCONHR¹, -NHCONR¹R², -NHCOOR³, -NHCOS- R¹, -COO R¹, -O R¹, -N (R¹)₂, -SR¹, -OH, -NH₂, -NH R¹,
wobei in R' und R" unabhängig voneinander R¹ und R² gleich oder verschieden sind und einen C₁-C₂₀-Alkyl-, C₃-C₂₀-Cycloalkyl-, -Aryl, C₇-C₁₈-Aralkylrest, Oligo-/Polyethylen- und/oder -Propylenglykole darstellen und R³ eine der Bedeutungen von R¹ hat oder einen Polyester- oder einen Polyamidrest bedeutet, und m einer ganzen Zahl von 1 bis 5.000 entspricht, und bei oligomeren Carbodiimiden m einer ganzen Zahl von 1 bis 5 entspricht, und bei polymeren Carbodiimiden m einer ganzen Zahl von > 5 entspricht,
und/ oder der Formel (III)

R'-[-(-N=C=N-Y-)ₚ-(-B-)_{q}-]ₒ-X (III),

enthält, mit
Y = Arylen, C₇-C₁₈-Aralkylen
p = eine ganze Zahl von 1 bis 500, bevorzugt 1 bis 100,
B = -NH-CO-NH-Z-, -NH-COO-Z-, -NH-COS-Z-,
q = eine ganze Zahl von 1 bis 500, bevorzugt 1 bis 100,
o = eine ganze Zahl von 1 bis 500, bevorzugt 1 bis 100,
X = H, - OH, -SH, -NH₂, -OR¹, -N(R¹)₂, -SR¹, -NHR¹, NR¹R² -OCO-NH- R', NH CO-, -NH-R', -S-CO-NH- R' R'= C₁-C₁₈-Alkyl, C₅-C₁₈-Cycloalkyl, Aryl, C₇-C₁₈-Aralkyl, - R"'-NH-COS-R¹, R"'-COOR¹, -R'''-OR¹ -R"'-N(R¹)₂, - R'''-SR¹, -R'"-OH, -R'''-NH₂, -R'''-NHR¹, -R"'-Epoxy, - R'''-NCO, -R'''-NHCONHR¹, -R"'-NHCONR¹R² oder - R"'-NH-COOR³, wobei
R¹ und R² gleich oder verschieden sind und einen C₁-C₂₀ -Alkyl, C₃-C₂₀-Cycloalkyl-, Aryl, C₇-C₁₈-Arylkylrest, Oligo-/Polyethylen- und/oder Propylenglykole darstellen und R³ eine der Bedeutungen von R¹ hat oder einen Polyester- oder einen Polyamidrest bedeutet,
Z = Y, Polyester, Polyether, Polyamide und R''' einen aromatischen und/oder araliphatischen Rest bedeutet

Besonders bevorzugt sind dabei aromatische oligomere und/oder polymere Carbodiimide der vorgenannten Formel (I) mit m ≥ 2.

Ebenfalls bevorzugt ist, dass es sich bei dem polymeren und/oder oligomeren Carbodiimid um Verbindungen der Formel (II) handelt, bei denen R''' 1,3-substituiertem-2,4,6-Triisopropylphenyl und/oder 1,3-Bis-(1-methyl-1-isocyanato-ethyl)-benzol und/oder Tetramethylxylylenderivaten und/oder 2,4-substituiertem Tolylen und/oder 2,6-substituiertem Tolylen und/oder Gemischen aus 2,4- oder 2,6-substituiertem Tolylen entspricht.

Bei den vorgenannten Carbodiimide handelt es sich um handelsübliche Verbindungen, die z.B. bei der Rhein Chemie Rheinau GmbH unter den Handelsnamen Stabaxol® P (N-C-N-Gehalt: 12,5-13,5%), Stabaxol® P 100 (N-C-N-Gehalt: 12,5 - 13,5 %) und Stabaxol® P 400 (N-C-N-Gehalt: 12,5 - 13,5 %) käuflich erhältlich sind.

Ebenso möglich ist auch die Herstellung der Carbodiimide nach den beispielsweise in Angewandte Chemie 74 (21), 1962, S. 801 - 806 beschriebenen Verfahren oder durch die Kondensation von Diisocyanaten unter Abspaltung von Kohlendioxid bei erhöhten Temperaturen, z.B. bei 40 °C bis 200 °C, in Gegenwart von Katalysatoren. Geeignete Verfahren werden in DE-B-11 56 401 und in der DE-B-11 305 94 beschrieben. Als Katalysatoren haben sich z.B. starke Basen oder Phosphorverbindungen bewährt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Carbonsäuremetallsalze und nicht basische Organometallverbindungen verwendet werden.

Zur Herstellung der eingesetzten Carbodiimide und/oder Polycarbodiimide eignen sich alle Isocyanate, wobei im Rahmen der vorliegenden Erfindung bevorzugt Carbodiimide und/oder Polycarbodiimide verwendet werden, die auf durch C₁- bis C₄-Alkyl substituierten aromatischen Isocyanaten aufbauen, wie z.B. 2,6-Diisopropylphenylisocyanat, 2,4,6-Triisopropylphenyl-1,3-diisocyanat, 2,4,6-Triethylphenyl-1,3-diisocyanat, 2,4,6-Trimethyl-phenyl-1,3-diisocyanat, 2,4'-Diisocyanatodiphenylmethan, 3,3',5,5'-Tetraisopropyl-4,4'-diisocyanatodiphenylmethan, 3,3',5,5'-Tetraethyl-4,4'-diisocyanatodiphenylmethan, Tetramethylxyloldiisocyanat, 1,5-Naphthalindiisocyanat, 4,4'-Diphenylmethandiisocyanat, 4,4'-Diphenyldimethyl-methandiisocyanat, 1,3-Phenylendiisocyanat, 1,4-Phenylendiisocyanat, 2,4-Tolylendiisocyanat, 2,6-Tolylendiisocyanat, ein Gemisch aus 2,4-Tolylendiisocyanat und 2,6-Tolylendiisocyanat, Xylylendi-isocyanat, Tetramethylxylylendiisocyanat, 2,6-Diisopropylphenylenisocyanat und 1,3,5-Triisopropylbenzol-2,4-diisocyanat oder deren Gemische, oder auf substituierten Aralkylen, wie 1,3-Bis-(1-methyl-1-isocyanato-ethyl)-benzol, basieren. Besonders bevorzugt ist es, wenn die Carbodiimide und/oder Polycarbodiimide auf 2,4,6-Triisopropylphenyl-1,3-diisocyanat und/oder 2,6-Diisopropylphenylenisocyanat und/oder Tetramethylxylylendiisocyanat basieren.

Polycarbodiimide können außerdem, wenn sie aus Isocyanaten hergestellt worden sind, noch reaktionsfähige NCO-Gruppen und komplex gebundene monomere Isocyanate enthalten.

In einer weiteren bevorzugten Ausführungsform der vorliegenden Erfindung beträgt die Gesamtmenge an Carbodiimide, bezogen auf den Kunststoff, größer 0,5%, besonders bevorzugt ≥0,7 Gew. %.

Des Weiteren ist bevorzugt, dass der Anteil an Polyhydroxyalkanoat in dem biobasierten Kunststoff 5-99,5%, besonders bevorzugt 20-99,3% beträgt.

Gegenstand der vorliegenden Erfindung ist zudem ein Verfahren zur Herstellung der erfindungsgemäßen biobasierten Kunststoffe, wonach mindestens ein Polyhydroxyalkanoat mit mindestens 0,5 Gew. %, bevorzugt 0,7 bis 4 Gew. %, besonders bevorzugt 1 - 2,5 Gew.%, ganz besonders bevorzugt 1 bis 2,0 Gew. % mindestens eines oligomeren und/oder polymeren, aromatischen und/oder araliphatischen Carbodiimids in einem Mischaggregat vermischt werden.

Mischaggregate im Sinne der Erfindung sind beispielsweise ein Extruder oder Kneter.

Gegenstand der vorliegenden Erfindung ist zudem die Verwendung der erfindungsgemäßen biobasierten Kunststoffe in langlebigen Anwendungen, wie z.B. Elektronik, Automotive, Construction, Transportwesen, im Haushalt, z.B. als Badutensilien, oder als Bürobedarf, oder für Anwendungen unter "severe conditions", wie z.B. die sterilen Bedingungen in der Medizin.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführungsbeispiele:

### Verwendete Chemikalien:

**CDI I:** ein sterisch gehindertes, aromatisches Carbodiimid (Stabaxol® I LF) mit einem NCN-Gehalt von mindestens 10.0%, von der Firma Rhein Chemie Rheinau GmbH.
**CDI II:** ein sterisch gehinderes, aromatisches polymeres Carbodiimid (Stabaxol® P) mit einem NCN-Gehalt von 13.5 %, von der Firma Rhein Chemie Rheinau GmbH.
**Carbodilite® LA-1 (H12MDI-PCDI):** ein polymeres aliphatisches Carbodiimid mit einem NCN-Gehalt von 15.8 %, von der Firma Nisshinbo.
**Polyhydroxyalkanoat (PHA):** Mirel P 1003

### Verwendete Geräte:

Die Einarbeitung der Carbodiimide in das Polyhydroxyalkanoat erfolgte mittels eines Labordoppelschneckenextruders ZSK 25 der Firma Werner und Pfleiderer.

Die eingesetzten Mengen an Additiv und die Art des eingesetzten Additives ergeben sich aus den Tabellen 1 bis 3.

Die F3-Normprüfkörper wurden an einer Spritzgießmaschine des Typs Arburg Allrounder 320 S 150 - 500 erstellt.

Für den Hydrolysetest von Polyhydroxyalkanoat (PHA) wurden die F3-Normprüfkörper in Wasser bei einer Temperatur von 85°C gelagert und nach verschiedenen Zeiteinheiten wurde eine Zugprüfung durchgeführt, um die Zugfestigkeit zu überprüfen. Die Hydrolyseschutzdauer beschreibt dabei die Lebensdauer der Prüfkörper, nach wie viel Tagen unter Prüfbedingungen die Zugfestigkeit einen Wert kleiner 5 MPa angenommen hat.

Die Messung der Schmelzvolumenrate (engl. Melt volume rate, MVR) erfolgte mit einem Gerät der Firma Göttfert, Modell MI 4. Messtemperatur 175°C. Prüfgewicht 2,16 kg. Aufschmelzzeit: 5 Minuten. Die Restfeuchtigkeit des Polymergranulates beträgt maximal 100 ppm.

**Tabelle 1: Erfindungsgemäße Proben und deren Testergebnisse:**

| Probe | Eingesetzte Additive in PHA | Hydrolyseschutzdauer [d] | MVR [ccm/ 10 min] |
|---|---|---|---|
| 1 | 1.0 % CDI II | 14 | 9.4 |
| 2 | 1.5 % CDI II | 29 | 10.8 |
| 3 | 2.0 % CDI II | 31 | 12.5 |

**Tabelle 2: Vergleichbeispiel nicht additiviertes PHA:**

| Probe | Grundmischung aus | Hydrolyseschutzdauer [d] | MVR [ccm/ 10 min] |
|---|---|---|---|
| 4 | PHA direkt aus dem Gebinde | 6 | 7.4 |
| 5 | PHA 1 x extrudiert | 6 | 24.9 |

**Tabelle 3: Vergleichsbeispiele:**

| Probe | Eingesetzte Additive in PHA | Hydrolyseschutzdauer [d] | MVR [ccm/ 10 min] |
|---|---|---|---|
| 6 | 0.5 % CDI I | 6 | 12.9 |
| 7 | 1.0 % CDI I | 14 | 10.8 |
| 8 | 1.5% CDI I | 19 | 13.5 |
| 9 | 2.0 % CDI I | 29 | 15.4 |
| | | | |
| 10 | 0.5 % CDI II | 7 | 10.4 |
| | | | |
| 11 | 0.5 % H12MDI-PCDI | 7 | 22.7 |
| 12 | 1.0 % H12MDI-PCDI | 11 | 10.9 |

Die erfindungsgemäßen Mischungen 1 bis 3 zeichnen sich durch einen hohen Hydrolyseschutz und exzellente MVR-Werte aus.

## Patentansprüche

1. Biobasierte Kunststoffe enthaltend eine Kombination aus mindestens einem Polyhydroxyalkanoat und > 0,5 Gew. % mindestens eines oligomeren und/oder polymeren aromatischen und/oder araliphatischen Carbodiimids.

2. Biobasierte Kunststoffe nach Anspruch 1, **dadurch gekennzeichnet, dass** der Anteil der oligomeren und/oder polymeren Carbodiimide mindestens 0,7 - 4 Gew. % beträgt.

3. Biobasierte Kunststoffe nach Anspruch 1 bis 2, **dadurch gekennzeichnet, dass** es sich bei dem polymeren und/ oder oligomeren aromatischen und/oder araliphatischen Carbodiimid um eine Verbindung der allgemeinen Formel (II),
R'-(-N=C=N-R'''-)ₘR'' (II)
handelt, in der
R''' einen aromatischen und/oder araliphatischen Rest bedeutet und bei m ≥1, R''' innerhalb des Moleküls gleich oder verschieden ist und bei verschiedenen Kombinationen jeder der vorgenannten Reste beliebig miteinander kombiniert werden kann,
R''' in dem Fall eines aromatischen oder eines araliphatischen Restes keinen oder in mindestens einer ortho-Stellung zum aromatischen Kohlenstoffatom, das die Carbodiimidgruppe trägt, aliphatische und/oder cycloaliphatische Substituenten mit mindestens 2 Kohlenstoffatomen tragen kann, die auch Heteroatome tragen können,
R' = C₁- C₁₈-Alkyl, C₅-C₁₈-Cycloalkyl-, Aryl, C₇-C₁₈- Aralkyl, -R-NHCOS- R¹, -R-COO R¹, -R-O R¹, -R-N(R¹)₂, -R-SR¹, -R-OH, -R-NH₂, -R-NHR¹, -R-Epoxy, -R-NCO, -R-NHCONHR¹, -R-NHCONR¹R² oder -R-NHCOOR³, wobei R = aromatische, aliphatisch, cycloaliphatisch und/oder araliphatischen Rest,
R"= H, -N=C=N-Aryl, -N=C=N-Alkyl, -N=C=N-Cycloalkyl, -N=C=N-Aralkyl, -NCO, -NHCONHR¹, -NHCONR¹R² , -NHCOOR³, -NHCOS- R¹, -COO R¹, -O R¹, -N (R¹)₂, -SR¹, -OH, -NH₂, -NH R¹,
wobei in R' und R" unabhängig voneinander R¹ und R² gleich oder verschieden sind und einen C₁ - C₂₀-Alkyl-, C₃-C₂₀-Cycloalkyl-, -Aryl, C₇-C₁₈-Aralkylrest, Oligo-/Polyethylen-und/oder -Propylenglykole darstellen und R³ eine der Bedeutungen von R¹ hat oder einen Polyester- oder einen Polyamidrest bedeutet, und m einer ganzen Zahl von 1 bis 5.000 entspricht, bei oligomeren Carbodiimiden m einer ganzen Zahl von 1 bis 5 entspricht, und bei polymeren Carbodiimiden m einer ganzen Zahl von > 5 entspricht,
und/oder mindestens ein Carbodiimid der Formel (II)
R'-[-(-N=C=N-Y-)ₚ-(-B-)_{q}-]ₒ-X (III),
enthält, mit
Y = Arylen, C₇-C₁₈-Aralkylen
p = eine ganze Zahl von 1 -bis 500, bevorzugt 1 bis 100,
B = -NH-CO-NH-Z-, -NH-COO-Z-, -NH-COS-Z-,
q = eine ganze Zahl von 1 bis 500, bevorzugt 1 bis 100,
o = eine ganze Zahl von 1 bis 500, bevorzugt 1 bis 100,
X = H, - OH, -SH, -NH₂, -OR¹, -N(R¹)₂, -SR¹, -NHR¹, NR¹R² -OCO-NH- R', NH CO-, -NH-R', -S-CO-NH- R' R'= C₁-C₁₈-Alkyl, C₅-C₁₈-Cycloalkyl, Aryl, C₇-C₁₈-Aralkyl, - R'''-NH-COS-R¹, -R'''-COOR¹, -R'''-OR¹, -R'''-N(R¹)₂, - R'''-SR¹, -R'''-OH, -R'''-NH₂, -R'''-NHR¹, -R'''-Epoxy, - R"'-NCO, -R'''-NHCONHR¹, -R'''-NHCONR¹R² oder - R'''-NH-COOR³, wobei
R¹ und R² gleich oder verschieden sind und einen C₁-C₂₀ -Alkyl, C₃-C₂₀-Cycloalkyl-, Aryl, C₇-C₁₈-Arylkylrest, Oligo-/Polyethylen- und/oder Propylenglykole darstellen und R³ eine der Bedeutungen von R¹ hat oder einen Polyester- oder einen Polyamidrest bedeutet, Z = Y, Polyester, Polyether, Polyamide und R''' für einen aromatischen und/oder araliphatischen Rest steht.

4. Biobasierte Kunststoffe nach einem oder mehreren der Ansprüche 1 bis 3, **dadurch gekennzeichnet, dass** es sich bei den eingesetzten oligomeren und/ oder polymeren Carbodiimiden bevorzugt um aromatische Verbindungen handelt.

5. Biobasierte Kunststoffe nach einem oder mehreren der Ansprüche 1 bis 4, **dadurch gekennzeichnet, dass** es sich bei dem polymeren und/oder oligomeren Carbodiimid um Verbindungen der Formel (II) handelt, bei denen R''' 1,3-substituiertem-2,4,6-Triisopropylphenyl und/oder 1,3-Bis-(1-methyl-1-isocyanato-ethyl)-benzol und/oder Tetramethylxylylenderivaten und/oder 2,4-substituierten Tolylen und/oder 2,6-substituierten Tolylen und/oder Gemischen aus 2,4- oder 2,6-substituiertem Tolylen entspricht.

6. Biobasierte Kunststoffe nach einem oder mehreren der Ansprüche 1 bis 5, **dadurch**
**gekennzeichnet, dass** es sich bei dem Polyhydroxyalkanoat um eine Verbindung der Formel (I) 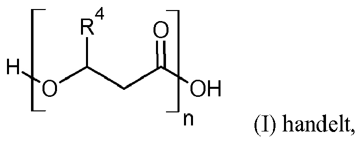 in der R⁴ einem C₁- bis C₁₄-Alkylrest entspricht.

7. Verfahren zur Herstellung der biobasierten Kunststoffe nach einem oder mehreren der Ansprüche 1 bis 6, **dadurch gekennzeichnet, dass** mindestens ein Polyhydroxyalkanoat mit mindestens 0,5 Gew.% mindestens eines oligomeren und/oder polymeren aromatischen und/oder araliphatischen Carbodiimids in einem Mischaggregat vermischt werden.

8. Verwendung der biobasierten Kunststoffe nach einem oder mehreren der Ansprüche 1 bis 7 in langlebigen Anwendungen in der Elektronik, Automotive, Construction, Transportwesen, im Haushalt, als Bürobedarf oder in Anwendungen unter "severe conditions".
